**Europäisches Patentamt**

**European Patent Office**

**Office européen des brevets**

(19)

(11) Veröffentlichungsnummer: **0 063 729**
**B1**

(12) # EUROPÄISCHE PATENTSCHRIFT

(45) Veröffentlichungstag der Patentschrift:
28.01.87

(51) Int. Cl.⁴: **B 01 F 5/06**

(21) Anmeldenummer: **82103009.5**

(22) Anmeldetag: **08.04.82**

(54) **Vorrichtung zur Invertierung und Mischung von strömenden Stoffen.**

(30) Priorität: **25.04.81 DE 3116557**

(43) Veröffentlichungstag der Anmeldung:
**03.11.82 Patentblatt 82/44**

(45) Bekanntmachung des Hinweises auf die Patenterteilung:
**28.01.87 Patentblatt 87/5**

(84) Benannte Vertragsstaaten:
**AT BE CH DE FR GB IT LI NL SE**

(56) Entgegenhaltungen:
**DE - A - 2 128 874**
**DE - C - 315 382**
**FR - A - 2 346 040**
**GB - A - 741 030**
**GB - A - 891 212**
**US - A - 3 923 288**

(73) Patentinhaber: **Eigenberger, Gerhart, Prof. Dr.,
Deidesheimer Strasse 21, D-6730 Neustadt (DE)**

(72) Erfinder: **Eigenberger, Gerhart, Prof. Dr., Deidesheimer
Strasse 21, D-6730 Neustadt (DE)**

ACTORUM AG

## Beschreibung

Die vorliegende Erfindung betrifft eine Vorrichtung zur Invertierung und Mischung von strömenden Stoffen in einem Rohr beliebigen Querschnitts mit mindestens einem Mischelement, bestehend aus Leitflächen, durch die im Rohrzentrum strömende Fluidelemente nach aussen, aussen strömende Fluidelemente nach innen transportiert werden («Strömungsinverter»). Dadurch wird zum einen eine intensive Durchmischung über den gesamten Rohrquerschnitt erreicht (statischer Mischer), zum anderen wird der Wärmeübergang von einer beheizten oder gekühlten Rohrwand zum strömenden Fluid wesentlich verbessert, ohne dass der Druckverlust unzulässig erhöht wird. Unter Fluid sollen hierbei Flüssigkeiten, Gase oder rieselfähige Feststoffe, sowie ein- oder mehrphasige Mischungen flüssiger, gasförmiger und/oder fester Bestandteile verstanden werden.

Es ist bekannt, dass sich der Wärmeübergang und die Durchmischung in durchströmten, wandbeheizten oder wandgekühlten Rohren durch Einbau statischer Mischelemente wesentlich verbessern lässt. In der Literatur (E.B. Naumann, AIChE Jl. 25 (1979), S. 246–258) wird unterschieden zwischen Mischelementen mit Strömungsteiler- und solchen mit Strömungsinvertereigenschaft. Es wird gezeigt, dass Strömungsinverter im allgemeinen eine grössere Verbesserung des Wärmeübergangs pro Element zulassen als Strömungsteiler. Während für Strömungsteiler eine Vielzahl von einfachen und wirksamen Bauformen bekannt sind, fehlen bislang einfache Vorrichtungen zur Invertierung einer Rohrströmung.

Aus DE-C-2 328 795, DE-B-2 522 106, US-A-3 652 061, US-A-3 751 009, US-A-3 923 288 sind statische Mischer bekannt, die aus ebenen Platten als Leit- und Begrenzungsflächen zusammengesetzt sind, deren eine Hauptachse senkrecht zur Rohrachse verläuft und deren andere Hauptachse zur Rohrachse geneigt ist, wobei benachbarte Leitflächen meist entgegengesetzte Neigung besitzen. Durch diese Anordnung wird die Strömung entsprechend den beiden Neigungsebenen aufgefächert und geteilt. Ein wesentlicher Nachteil dieser Anordnungen liegt darin, dass die Auffächerung der Strömung nur in zwei Richtungen erfolgt, wobei dem radialsymmetrischen Charakter der Rohrströmung nicht Rechnung getragen wird. Eine Invertierung der Rohrströmung ist mit einer solchen Anordnung nur zum Teil zu erreichen, u.a. dadurch, dass aufeinanderfolgende Elemente um 90° versetzt eingebaut werden. Aus diesen Gründen ist der Wärmeübergang von der Rohrwand zum strömenden Fluid für bestimmte Anwendungsfälle verbesserungsbedürftig.

Aus der Offenlegungsschrift DE-A-2 205 371 ist weiterhin eine Mischeinrichtung bekannt, die aus einer Anzahl jeweils entgegengesetzt geneigter Strömungskanäle besteht, die gegeneinander geöffnet sind und in bezug auf die Strömungsteilung ähnlich wirken wie die obengenannten Anordnungen.

Ferner ist eine grosse Zahl sogenannter Wendelmischer bekannt, bei denen im Prinzip eine Folge von links- und rechtsgerichteten Wendeln die Strömung nacheinander aufteilt. Da hierbei eine Umschichtung von Strömungspartien von innen nach aussen nur indirekt erfolgt, sind diese Anordnungen bezüglich einer Verbesserung des Wärmeübergangs weniger günstig als die vorstehend aufgeführten Ausführungen.

Es sind also eine Vielzahl statischer Mischer bekannt, die aber nur unzureichend für eine Invertierung der Rohrströmung zum Zwecke der Verbesserung des Wärmeübergangs bei wandbeheizten oder wandgekühlten Rohren geeignet sind.

Es stellt sich daher die Aufgabe, eine einfache Vorrichtung mit niedrigem Strömungswiderstand zu finden, durch die im Rohrzentrum strömende Fluidpartien nach aussen, aussen strömende Fluidpartien nach innen transportiert werden, wobei die Umschichtung über dem Umfang gesehen möglichst gleichmässig erfolgen soll.

Diese Aufgabe wird erfindungsgemäss durch die Merkmale der Patentansprüche 1 und 2 gelöst. Vorteilhafte Ausgestaltungen der Erfindung sind Gegenstand der Unteransprüche.

In einem Rohr sind also Mischelemente gleicher Form einzeln oder aufeinanderfolgend angeordnet, wobei jedes Mischelement aus einer geraden Anzahl sektorförmiger Leitflächen und gegebenenfalls aus Begrenzungsflächen besteht. Die Aufgabe der Leitflächen ist der Fluidtransport in radialer Richtung von aussen nach innen und von innen nach aussen. Die Leitflächen stellen dabei Ausschnitte aus der Mantelfläche von Kegeln oder Pyramiden mit Spitze in der Rohrachse dar, wobei die Erzeugende der Kegelfläche mit der Rohrachse einen konstanten oder in radialer und in Umfangsrichtung veränderlichen Anstellwinkel von 10° bis 70° bildet. Ein Mischelement kann z.B. nur aus Leitflächen ohne Begrenzungsflächen aufgebaut sein, wobei die Leitflächen entweder nur nach innen oder nur nach aussen weisen und die Rückströmung ungerichtet erfolgt, oder es wechseln sich in Umfangsrichtung nach innen und nach aussen weisende Leitflächen ab.

Die Begrenzungsflächen bilden zusammen mit den Leitflächen Strömungskanäle, durch die eine gezielte Umschichtung der Strömung von aussen nach innen und von innen nach aussen stattfindet. Begrenzungsflächen sind dabei entweder ebene Flächen, die sich mit ihren Hauptachsen vorzugsweise in axialer und radialer Richtung erstrecken oder Wendeln um die Rohrachse.

Eine vollständige vermischungsfreie Umschichtung des gesamten Innenbereichs einer Rohrströmung («Innenströmung») nach aussen sowie des Aussenbereichs («Aussenströmung») nach innen wird erfindungsgemäss durch eine Vorrichtung bewirkt, bei der ein Einlaufkanal zunächst den Innenbereich der Rohrströmung vom Aussenbereich abtrennt, sodann ein Einlaufverteiler die Innenströmung sowohl wie die Aussenströmung jede für sich zusammenfasst und auf eine gerade Anzahl von Strömungskanälen verteilt, wobei jeder Strömungskanal einen Sektor des freien Rohrquerschnitts ausfüllt. Die anschliessende Aufteilung der Innenströmung aus ihren Kanälen auf den Aussenbereich, sowie der Aussenströmung auf den Innenbereich lässt sich am einfachsten durch einen Verteiler bewirken, der dem Einlaufverteiler identisch ist und spiegelbildlich zu diesem, sowie um einen Sektor versetzt, angeordnet ist. Dabei lässt sich der Verteiler durch eine geeignete Anordnung aus Leitflächen und Begrenzungsflächen der vorstehend beschriebenen Art aufbauen.

Durch die erfindungsgemässe Vorrichtung wird auf einfache Weise eine Umschichtung einer Rohrströmung von innen nach aussen und von aussen nach innen bewirkt, so dass damit der Wärmeübergang in wandbeheizten oder gekühlten Rohren wesentlich verbessert wird. Darüber hinaus eignet sich die Vorrichtung für alle traditionellen Einsatzgebiete statischer Mischer.

Durch ihre einfache Form eignet sie sich ausserdem als Formkörper oder Träger für Festbettkatalysatoren, Adsorbentien u.ä., die in Rohrbündelapparaten eingesetzt werden. Der gute Wärmeübergang zur Rohrwand sowie das definierte, für alle Rohre gleiche Strömungsverhalten bedeuten wesentliche Verbesserungen gegenüber den bislang üblichen regellosen Festbettschüttungen.

Ein weiteres vorteilhaftes Einsatzgebiet sind Rohre, die mit einer Feststoffschüttung (Adsorbens, Katalysator etc.) gefüllt sind und bei Durchströmung einen grossen Druckverlust besitzen. Hier sorgt die erfindungsgemässe Vorrichtung als Füllkörper über die Verbesserung des Wandwärmeübergangs hinaus für eine Auflockerung und damit für eine gleichmässigere Durchströmung sowie für eine Reduzierung des Druckverlustes, ohne dass es zur Ausbildung von Strömungsgassen («Randgängigkeit») kommt.

Die verschiedenen möglichen Varianten bei der Gestaltung der Leitflächen sowie bei der Gestaltung der Begrenzungsflächen, und ihre Anordnung zueinander geben einen weiteren Spielraum bei der Ausgestaltung der erfindungsgemässen Vorrichtung und erlauben es, auf die Besonderheiten des jeweiligen Einsatzfalls einzugehen.

Die Erfindung wird nachstehend anhand einiger in den Zeichnungen dargestellter schematischer Ausführungsbeispiele erläutert.

Es zeigen:

Fig. 1, 2 und 3 die Grundform der erfindungsgemässen Vorrichtung in perspektivischer Darstellung sowie im Längs- und Querschnitt,

Fig. 4 eine Ausgestaltung nach Unteranspruch 5 (axiale Verschiebung von Leitflächen gleicher Neigungsrichtung) und nach Unteranspruch 6 (Schrägstellung der Leitflächen),

Fig. 5, 6 und 7 eine Ausgestaltung nach Unteranspruch 9 (Trennung der Leitflächen durch seitliche Begrenzungsflächen) jeweils in perspektivischer Darstellung sowie im Längs- und Querschnitt,

Fig. 8 den Querschnitt durch Leitflächen nach Anspruch 2 (Erzeugende der Kegelfläche ein- oder mehrfach geschwungen),

Fig. 9 die Draufsicht auf Leitflächen mit unterschiedlichen Spaltformen zur Rohrwand (Anspruch 1 und 3),

Fig. 10 eine Ausgestaltung, bei der axial aufeinanderfolgende Leitflächen sich seitlich überlappen oder seitlich einen Spalt lassen (Anspruch 4),

Fig. 11 und 12 Einzelelemente aus Leitflächen in perspektivischer Darstellung und Draufsicht,

Fig. 13 das Schema der Ineinanderschachtelung von Einzelelementen nach Fig. 11 und 12,

Fig. 14 eine Ausgestaltung nach Anspruch 14 (nur nach innen weisende Leitflächen), sowie

Fig. 15, 16 und 17 eine Ausgestaltung nach Anspruch 12 zur vollständigen Strömungsumschichtung in perspektivischer Darstellung sowie im Längs- und Querschnitt.

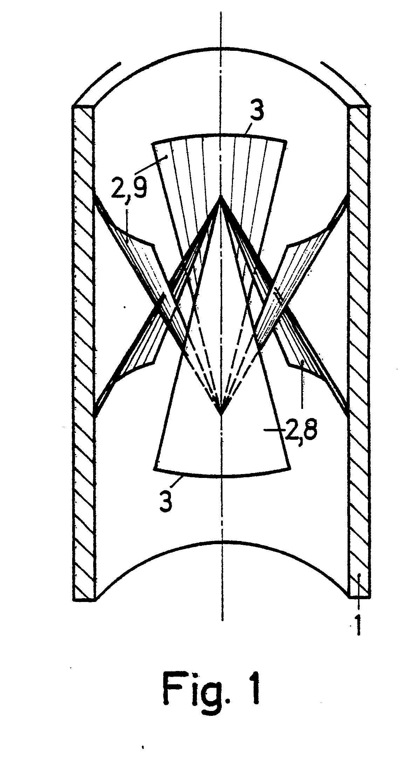

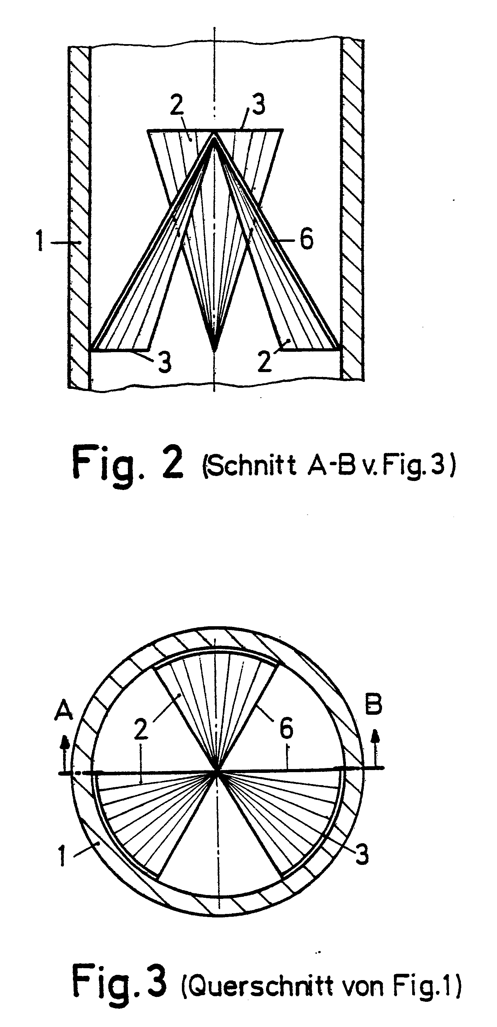

Figur 1 zeigt eine Grundform der erfindungsgemässen Vorrichtung im aufgeschnittenen Rohr in perspektivischer Darstellung. In einem Rohr 1 sind eine gerade Anzahl von Leitflächen 2 angebracht. Die Leitflächen 2 bestehen aus Ausschnitten aus der Mantelfläche von zwei gleichen geraden Kegeln, deren gemeinsame Achse mit der Achse des Rohres 1 zusammenfällt. Dabei bilden die Erzeugenden der Kegelfläche mit der Rohrachse einen Anstellwinkel von vorzugsweise 25° bis 45°. Die einzelnen Leitflächen 2 sind in der gezeigten Weise abwechselnd nach innen und aussen geneigt und liegen mit äusseren Schnittkanten 3 an der Innenwand des Rohres 1 an. Die gezeigte Anordnung ist bezüglich der Strömungsrichtung symmetrisch. Je drei Leitflächen 9 lösen die Strömung von der Wand ab und leiten sie nach innen, drei andere Leitflächen 8 führen die Strömung von innen zur Wand. Die Figuren 2 und 3 zeigen die in Figur 1 dargestellte Vorrichtung im Längs- und Querschnitt.

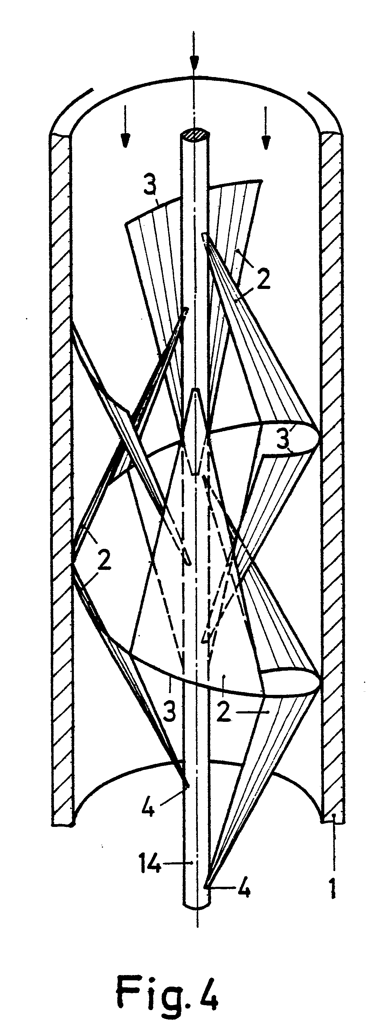

Eine weitere vorteilhafte Ausgestaltung der erfindungsgemässen Vorrichtung zeigt Figur 4. Dabei sind die in Umfangsrichtung aufeinanderfolgenden Leitflächen 2 mit gleicher Neigungsrichtung jeweils um einen konstanten Betrag in axialer Richtung verschoben. Ausserdem besitzt die äussere Schnittkante 3 der Leitflächen 2 mit der Richtung der Rohrachse einen von 90° verschiedenen Anstellwinkel. Durch Wahl des Anstellwinkels im Bereich von 45° bis 80° wird der radialen (nach aussen oder innen gerichteten) Strömungsrichtung der Leitflächen 2 eine Komponente in Umfangsrichtung überlagert. Dadurch liegt auch im Bereich des Kontaktes der äusseren Schnittkanten 3 mit der Innenwand des Rohres 1 eine eindeutige Strömungsrichtung vor, so dass ein Stau der Strömung auf der Vorderseite und ein Stagnationsbereich auf der Rückseite der Leitflächen 2 vermieden wird.

Ferner können die Leitflächen 2 mit inneren Schnittkanten 4 an einem Zentralrohr 14 anliegen oder mit diesem fest verbunden sein, wobei der Wärmeübergang durch die erfindungsgemässe Vorrichtung nicht nur zu dem Rohr 1, sondern auch zu dem Zentralrohr 14 verbessert wird.

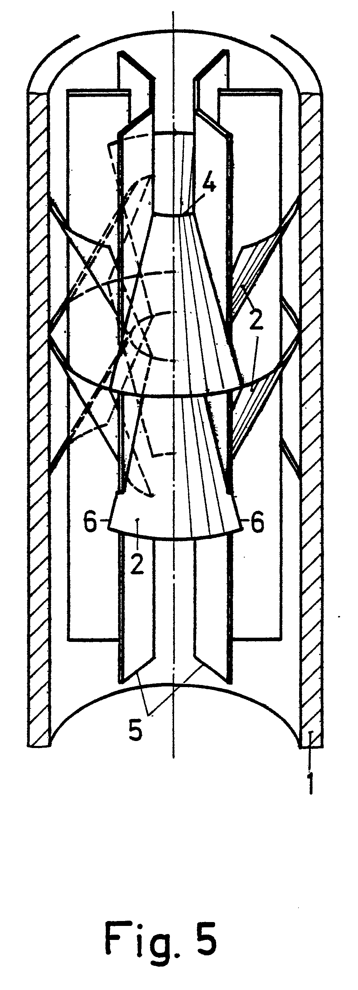

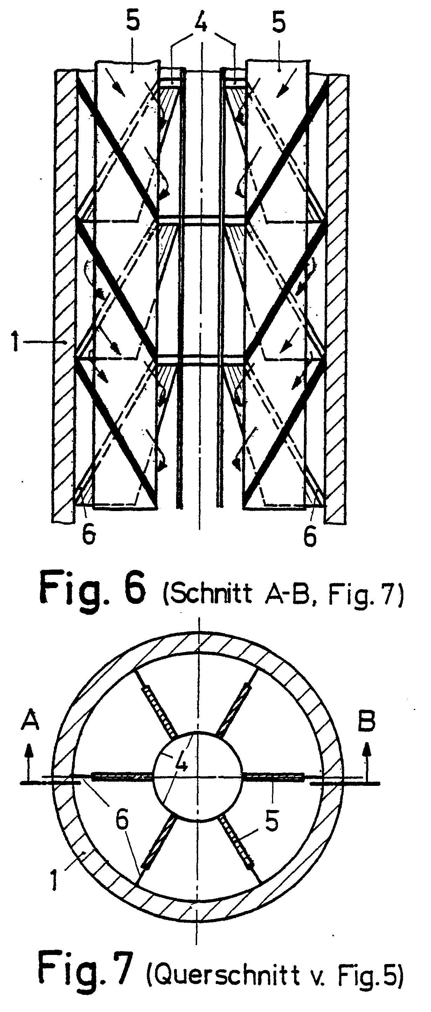

Eine weitere vorteilhafte Ausgestaltung der Erfindung zeigt Figur 5 im aufgeschnittenen Rohr in perspektivischer Darstellung, Figur 6 im Längsschnitt und Figur 7 im Querschnitt. Die einzelnen, abwechselnd nach innen und aussen weisenden Leitflächen 2 werden dabei durch Begrenzungsflächen 5 über einen bestimmten Bereich des Radius voneinander getrennt, wobei die Begrenzungsflächen 5 an seitlichen Schnittkanten 6 der Leitflächen 2 anliegen, so dass sich Strömungskanäle bilden, in denen das Fluid abwechselnd nach innen und nach aussen transportiert wird. Dadurch wird eine Stegumströmung der Leitflächen 2 im Bereich der Begrenzungsflächen 5 vermieden und die Umwälzung von innen nach aussen verbessert. In Figur 6 ist das Strömungsschema skizziert. Die Begrenzungsflächen 5 können entweder in ihrer einen Hauptachse parallel zur Rohrachse liegen (Figur 5–7) oder sich in Form von Wendeln um die Rohrachse winden.

In ihrer zweiten Hauptachse sind sie zweckmässigerweise radial ausgerichtet.

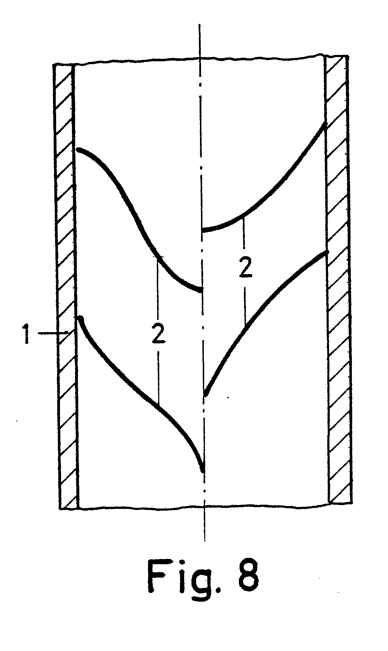

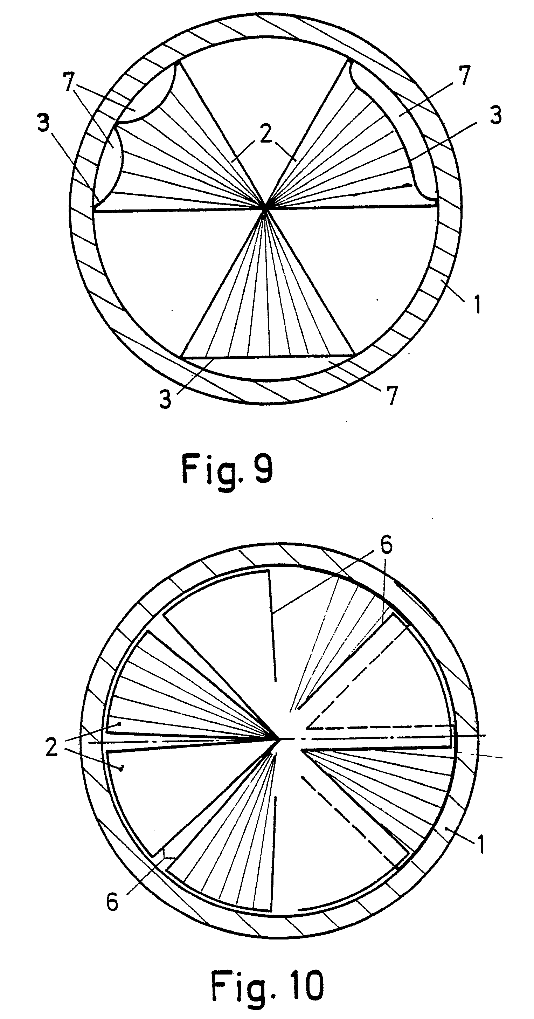

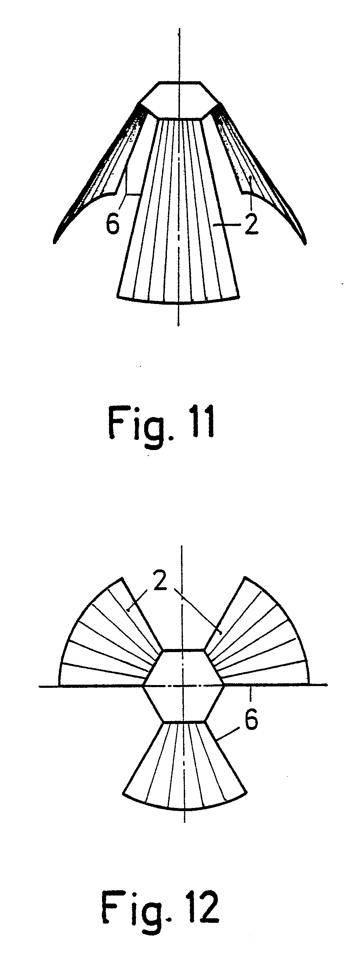

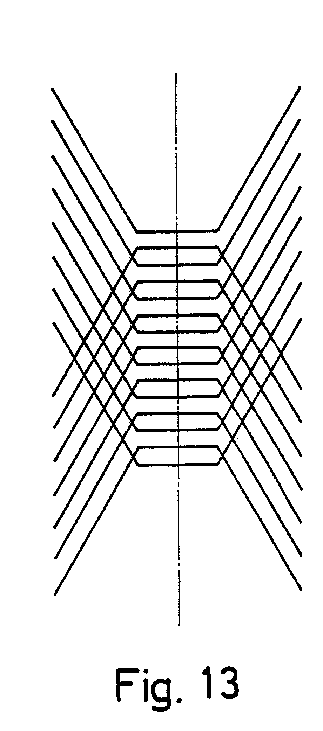

Die Leitflächen 2 sind vorzugsweise aus der Mantelfläche gerader Kegel oder Pyramiden gebildet, jedoch können auch einfach oder mehrfach geschwungene Formen Verwendung finden, wie in Figur 8 im Längsschnitt skizziert. Ausserdem kann es vorteilhaft sein, in den Leitflächen Aussparungen oder Ausschnitte vorzusehen. Das gilt insbesondere für die Gestaltung der äusseren Schnittkante 3 und ihre Verbindung mit der Rohrwand. Figur 9 zeigt einige Ausgestaltungsmöglichkeiten. So lässt sich durch einen definierten Spalt 7 ein Stau an der Leitflächenvorderseite und ein Stagnationsbereich an der Leitflächenrückseite vermeiden. In Strömungsrichtung aufeinanderfolgende Leitflächen 2 können mit ihren seitlichen Schnittkanten 6 entweder überlappen oder einen Zwischenraum lassen (Figur 10). Die Ausgestaltung in nicht überlappender Bauweise erlaubt den einfachen Aufbau einer erfindungsgemässen Vorrichtung durch Ineinanderschachtelung von Einzelelementen. Figur 11 und 12 zeigen als Beispiel ein Einzelelement mit drei Leitflächen 2 in perspektivischer Darstellung und in Draufsicht, Figur 13 zeigt das Schema der Ineinanderschachtelung dieser Elemente im Längsschnitt.

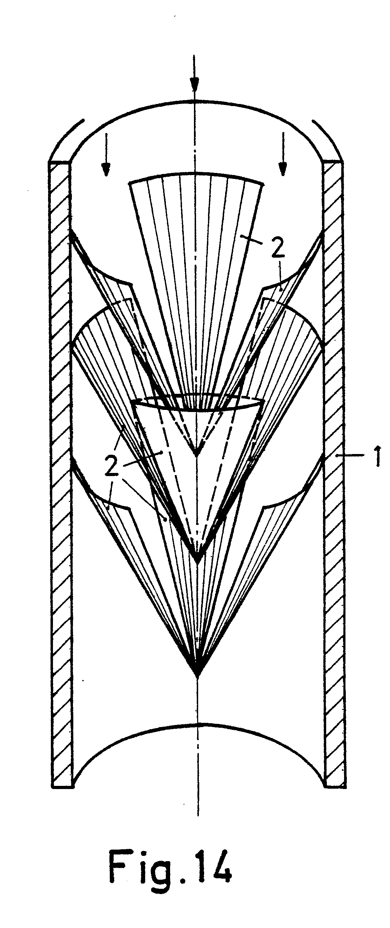

In einer anderen zweckmässigen Ausführungsform besteht die Vorrichtung aus Leitflächen 2, die die Strömung entweder nur nach innen oder nur nach aussen leiten. Die Rückströmung erfolgt dabei ungerichtet. Figur 14 zeigt ein entsprechendes Beispiel von drei aufeinanderfolgenden Leitflächengruppen im aufgeschnittenen Rohr in perspektivischer Darstellung. Zweckmässigerweise werden dabei aufeinanderfolgende Leitflächengruppen so gedreht, dass versperrte und unversperrte Rohrquerschnittssektoren einander abwechseln.

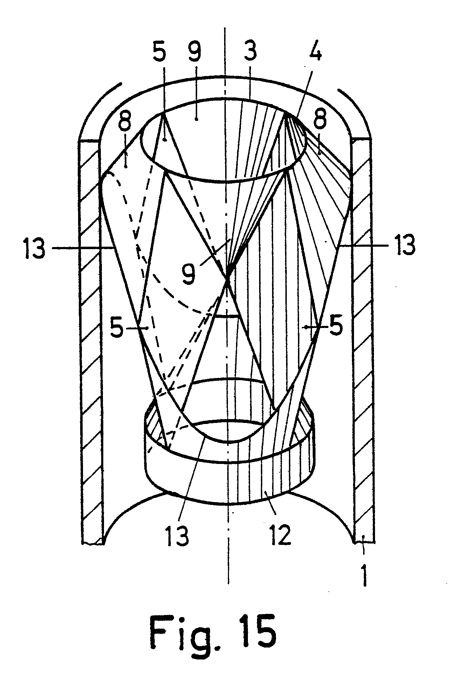

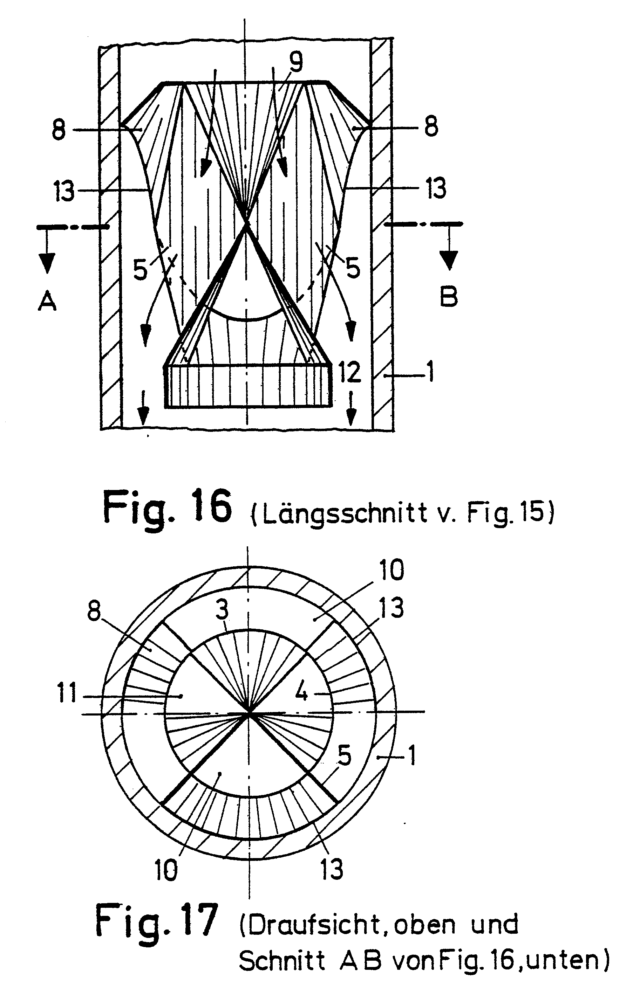

Eine erfindungsgemässe Vorrichtung zur Umschichtung des gesamten Aussenbereichs einer Rohrströmung nach innen und des gesamten Innenbereichs nach aussen ist in Figur 15 in perspektivischer Darstellung, in Figur 16 im Längsschnitt und in Figur 17 in Draufsicht skizziert. Die gezeigte Vorrichtung besteht aus zwei spiegelbildlich zueinander angebrachten Teilen, die um 90° verdreht miteinander verbunden sind. Der in Strömungsrichtung vordere Teil (Anströmung von oben) sei im folgenden als Einlaufverteiler bezeichnet. Er besteht aus den vier Begrenzungsflächen 5, die sich mit ihren Hauptachsen in axialer und radialer Richtung erstrecken, sowie aus zwei nach aussen weisenden Leitflächen 8 und aus zwei nach innen weisenden Leitflächen 9, die so zusammengesetzt sind, dass die inneren Schnittkanten 4 der nach aussen weisenden Leitflächen 8 mit den äusseren Schnittkanten 3 der nach innen weisenden Leitflächen 9 einen Einlaufkanal bilden, der Aussen- und Innenströmung voneinander trennt. Die Aufgabe der nach aussen weisenden Leitflächen 8 ist die Zusammenfassung der Aussenströmung auf zwei einander gegenüberliegende Strömungskanäle 10, die in Form von zwei 90°-Sektoren die Hälfte des Rohrquerschnitts ausfüllen. Analog verteilen die beiden nach innen weisenden Leitflächen die Innenströmung auf zwei Strömungskanäle 11. Dazu liegen die nach aussen weisenden Leitflächen 8 mit ihrer äusseren Schnittkante 13 am Rohr 1, die nach innen weisenden Leitflächen 9 treffen sich entweder mit ihren Spitzen (Figur 15–17), oder stossen mit ihren inneren Schnittkanten an ein nicht gezeigtes Zentralrohr an. Die Begrenzungsflächen 5 erstrecken sich in ihrer grössten radialen Ausdehnung von der Rohrachse bzw. dem Zentralrohr bis zur Innenwand des Rohres 1. Die Verteilung der Innenströmung aus den Strömungskanälen 11 auf den Aussenbereich und der Aussenströmung aus den Strömungskanälen 10 auf den Innenbereich erfolgt durch eine Vorrichtung, die dem Einlaufverteiler entspricht und auf den Kopf gestellt sowie um einen Sektor verdreht an diesen anschliesst.

In Figur 15–17 besitzen die nach aussen weisenden Leitflächen 8 einen über dem Umfang stetig veränderlichen Anstellwinkel von 45° bis 74°. Auch dadurch lässt sich ein Stau der Strömung auf der Leitflächenunterseite vermeiden.

Bei Bedarf kann der Einlaufkanal bzw. der dazu spiegelbildliche Auslaufkanal durch ein Rohrstück 12 verlängert werden, das eine schnelle Vermischung von Aussen- und Innenströmung verhindert.

**Patentansprüche**

1. Vorrichtung zur Invertierung und Mischung von strömenden Stoffen in einem Rohr beliebigen Querschnitts mit mindestens einem Mischelement, bestehend aus Leitflächen, dadurch gekennzeichnet, dass sektorförmige Leitflächen (2) den Querschnitt des Rohres (1) ausfüllen, wobei ggf. zwischen Rohrwand und Leitfläche ein Spalt (7) und/oder im Achsbereich ein freier Strömungsquerschnitt vorgesehen sind, und dass jede Leitfläche (2) einen Ausschnitt aus der Mantelfläche eines Kegels oder einer Pyramide mit Spitze in der Achse des Rohres (1) darstellt, wobei die Erzeugende der Mantelfläche mit der Rohrachse einen konstanten oder einen sich in radialer und in Umfangsrichtung stetig ändernden Anstellwinkel von 10° bis 70° bildet, und sich in Umfangsrichtung nach aussen weisende Leitflächen (8) und nach innen weisende Leitflächen (9) abwechseln, so dass etwa je die Hälfte des Rohrquerschnitts mit nach aussen weisenden Leitflächen (8), die andere Hälfte mit nach innen weisenden Leitflächen (9) bedeckt ist.

2. Vorrichtung zur Invertierung und Mischung von strömenden Stoffen in einem Rohr beliebigen Querschnitts mit mindestens einem Mischelement, bestehend aus Leitflächen, dadurch gekennzeichnet, dass bei der Vorrichtung nach Anspruch 1 die erzeugende Gerade des Kegels durch eine einfach oder mehrfach geschwungene Kurve ersetzt ist.

3. Vorrichtung nach Anspruch 1 oder 2, dadurch gekennzeichnet, dass die äusseren Schnittkanten (3) der Leitflächen (2) entweder über ihrer ganzen Länge an der Rohrinnenwand anliegen bzw. fest mit der Rohrwand verbunden sind, oder zur Rohrwand einen Spalt (7) freilassen, wobei der Spalt eine konstante oder nicht konstante Breite aufweist.

4. Vorrichtung nach einem der Ansprüche 1 bis 3, dadurch gekennzeichnet, dass axial aufeinanderfolgende Leitflächen (2) sich mit ihren seitlichen Schnittkanten überlappen oder einen Zwischenraum lassen.

5. Vorrichtung nach einem der Ansprüche 1 bis 4, dadurch gekennzeichnet, dass in Umfangsrichtung aufeinanderfolgende Leitflächen (2) mit gleicher Neigungsrichtung um einen konstanten Betrag in axialer Richtung verschoben sind.

6. Vorrichtung nach einem der Ansprüche 1 bis 5, dadurch gekennzeichnet, dass die äusseren Schnittkanten (3) der Leitflächen (2) mit der Richtung der Rohrachse einen Winkel von 45° bis 90° bilden.

7. Vorrichtung nach einem der Ansprüche 1 bis 6, dadurch gekennzeichnet, dass einzelne Mischelemente so zusammengesetzt werden, dass nach aussen weisende Leitflächen (8) jeweils in die Zwischenräume zwischen nach innen weisenden Leitflächen (9) hineinragen.

8. Vorrichtung nach einem der Ansprüche 1 bis 7, dadurch gekennzeichnet, dass die Leitflächen (2) mit ihren inneren Schnittkanten (4) an einem in der Achse des Rohres (1) angeordneten Zentralrohr (14) anliegen oder daran befestigt sind.

9. Vorrichtung nach einem der Ansprüche 1 bis 8, dadurch gekennzeichnet, dass die nach aussen weisenden Leitflächen (8) von den benachbarten nach innen weisenden Leitflächen (9) über einen bestimmten Bereich des Radius durch Begrenzungsflächen (5) voneinander getrennt sind, dergestalt, dass die Begrenzungsflächen (5), an den seitlichen Schnittkanten (6) der Leitflächen (2) anliegen, wobei nahe der Rohrwand und nahe der Rohrachse ein hinreichend grosser Strömungsquerschnitt frei bleibt.

10. Vorrichtung nach Anspruch 9, dadurch gekennzeichnet, dass sich die Begrenzungsflächen (5) in Form einer Wendel um die Rohrachse winden.

11. Vorrichtung zur vermischungsfreien Umschichtung des gesamten Innenbereichs einer Rohrströmung nach aussen sowie des Aussenbereichs nach innen nach einem der Ansprüche 1 bis 10, dadurch gekennzeichnet, dass Innen- und Aussenströmung durch einen Einlaufkanal getrennt werden und durch die Anordnung der Leitflächen (2) und der Begrenzungsflächen (5) sowohl die Innenströmung wie die Aussenströmung jede für sich zusammengefasst und auf eine gerade Anzahl von Strömungskanälen (10, 11) verteilt wird, wobei jeder Strömungskanal (10, 11) einen Sektor des Rohrquerschnitts ausfüllt, und dass eine dem Einlaufkanal entsprechende Anordnung die Aufteilung der ehemaligen Innenströmung aus ihren Strömungskanälen auf den Aussenbereich, sowie der Aussenströmung auf den Innenbereich vornimmt.

12. Vorrichtung nach Anspruch 11, dadurch gekennzeichnet, dass die Verteilung von Innen- und Aussenströmung auf die sektorförmigen Strömungskanäle (10, 11) durch einen Verteiler erfolgt, bei dem nach aussen weisende Leitflächen (8) und nach innen weisende Leitflächen (9) in Umfangsrichtung so aufeinanderfolgend angeordnet sind, dass die inneren Schnittkanten (4) der nach aussen weisenden Leitflächen (8) und die äusseren Schnittkanten (3) der nach innen weisenden Leitflächen (9) den Beginn des Einlaufkanals darstellen, während die äusseren Schnittkanten (13) der nach aussen weisenden Leitfläche (8) an der Rohrwand anliegen und die inneren Schnittkanten (4) der nach innen weisenden Leitflächen (9) sich entweder mit ihrer Spitze treffen oder am Zentralrohr (14) anliegen und dass die Abgrenzung der einzelnen Strömungskanäle durch die Begrenzungsflächen (5) erfolgt, wobei sich die Begrenzungsflächen (5) in ihrer grössten radialen Ausdehnung von der Rohrwand bis zur Achse bzw. bis zum Zentralrohr erstrecken.

13. Vorrichtung nach Anspruch 12, dadurch gekennzeichnet, dass der Einlaufkanal durch ein gerades Rohrstück (12) in Richtung der Rohrachse verlängert wird.

14. Vorrichtung nach einem der Ansprüche 1 bis 8, dadurch gekennzeichnet, dass entweder die nach innen weisenden Leitflächen (9) oder die nach aussen weisenden Leitflächen (8) fehlen und dass die Leitflächen (8, 9) des folgenden Elements in die freien Sektoren des vorangehenden Elements gedreht sind.

15. Vorrichtung nach einem der Ansprüche 1 bis 14, dadurch gekennzeichnet, dass die Vorrichtung ganz oder teilweise aus einem Stoff hergestellt ist, oder mit einem Stoff beschichtet wird, der katalysierende, adsorbierende oder sonstige, eine chemische Reaktion günstig beeinflussende Eigenschaften besitzt.

## Claims

1. A device for inverting the flow of, and mixing, flowing materials in a pipe of any desired cross-section, comprising at least one mixing element consisting of guide surfaces, wherein the sector-shaped guide surfaces (2) fill out the cross-section of the pipe (1), it being possible to provide gaps between the wall of the pipe and the guide surfaces, and/or a free flow cross-section in the axial region, and wherein each guide surface (2) is a section of the peripheral surface of a cone or a pyramid, the tip of which lies on the axis of the pipe (1), the generatrix of the peripheral surface forming with the pipe axis an angle of incidence of 10° to 70° which remains constant or continuously changes in the radial and circumferential directions, and guide surfaces (8), which point outwardly in a circumferential direction, alternating with inwardly pointing guide surfaces (9), so that approximately one half of the pipe cross-section is filled out by outwardly pointing guide surfaces (8), and the other half is filled out by inwardly pointing guide surfaces (9).

2. A device for inverting the flow of, and mixing, flowing materials in a pipe of any desired cross-section, comprising at least one mixing element consisting of guide surfaces, wherein, in the case of the device as claimed in claim 1, the generator of the cone is replaced by a line having one or more curves.

3. A device as claimed in claim 1 or 2, wherein the outer edges (3) of the guide surfaces (2) make contact with, or are firmly attached to, the inner wall of the pipe over their entire length, or leave gaps (7) next to the pipe wall, the gaps being of constant or irregular width.

4. A device as claimed in any of claims 1 to 3, wherein guide surfaces (2) which are arranged consecutively in the axial direction overlap one another at their lateral edges, or leave gaps.

5. A device as claimed in any of claims 1 to 4, wherein guide surfaces (2) which are arranged consecutively in the circumferential direction and are inclined in the same direction are displaced in the axial direction by a constant amount.

6. A device as claimed in any of claims 1 to 5, wherein the outer edges (3) of the guide surfaces (2) form an angle of 45° to 90° with the direction of the pipe axis.

7. A device as claimed in any of claims 1 to 6, wherein individual mixing elements are fitted together in such a way that outwardly pointing guide surfaces (8) project into the gaps between inwardly pointing guide surfaces (9).

8. A device as claimed in any of claims 1 to 7, wherein the inner edges (4) of guide surfaces (2) make contact with, or are firmly attached to, a central tube (14) arranged along the axis of pipe (1).

9. A device as claimed in any of claims 1 to 8, wherein the outwardly pointing guide surfaces (8) are separated from the adjacent inwardly pointing guide surfaces (9) over a certain portion of the radius by bounding surfaces (5) in such a way that the bounding surfaces (5) make contact with the lateral edges (6) of the guide surfaces (2), a sufficiently large flow cross-section being left in the vicinity of the pipe wall and in the vicinity of the pipe axis.

10. A device as claimed in claim 9, wherein the bounding surfaces (5) wind themselves around the pipe axis in the form of a helix.

11. A device for transferring the entire central portion of a stream of material flowing in a pipe to the outside, and the peripheral portion of said stream to the inside, without any mixing taking place, as claimed in any of claims 1 to 10, wherein the central stream and the peripheral stream are separated by an inlet channel, and the central stream and the peripheral stream are collected separately by the arrangement of guide surfaces (2) and bounding surfaces (5) and each stream is distributed over an even number of flow channels (10, 11), each flow channel (10, 11) filling out a sector of the pipe cross-section, and wherein an arrangement corresponding to the inlet channel distributes the former central stream, issuing from its flow channels, over the peripheral region, and the peripheral stream over the central region.

12. A device as claimed in claim 11, wherein distribution of the central and peripheral streams over the sector-shaped flow channels (10, 11) is effected by means of a distributor in which outwardly pointing guide surfaces (8) and inwardly pointing guide surfaces (9) are arranged consecutively in the circumferential direction in such a manner that the inner edges (4) of the outwardly pointing guide surfaces (8) and the outer edges (3) of the inwardly pointing guide surfaces (9) constitute the beginning of the inlet channel, whereas the outer edges (13) of outwardly pointing guide surfaces (8) make contact with the pipe wall, and the inner edges (4) of the inwardly pointing guide surfaces (9) either meet at their tips or make contact with central tube (14), and wherein the individual flow channels are delimited by the bounding surfaces (5), the bounding surfaces (5), in their greatest radial dimension, extending from the pipe wall to the axis or central tube.

13. A device as claimed in claim 12, wherein the inlet channel is extended in the direction of the pipe axis by a straight tubular section (12).

14. A device as claimed in any of claims 1 to 8, wherein either the inwardly pointing guide surfaces (9) or the outwardly pointing guide surfaces (8) are missing, and the guide surfaces (8, 9) of the following element are twisted into the free sectors of the preceding element.

15. A device as claimed in any of claims 1 to 14, which is made entirely or partially of a material, or is coated with a material, which exhibits catalyzing or adsorbing properties or other properties having a favourable effect on a chemical reaction.

**Revendications**

1. Dispositif d'inversion et de mélange de matières en écoulement dans un tube de section quelconque, muni d'au moins un élément mélangeur, constitué par des surfaces directrices, caractérisé par le fait que des surfaces directrices (2) en forme de secteur remplissent la section du tube (1), un interstice (7) et/ou une section d'écoulement libre, dans la zone axiale, étant prévus éventuellement entre la paroi du tube et la surface directrice, et chaque surface directrice (2) représente un secteur de la surface latérale d'un cône ou d'une pyramide à sommet sur l'axe du tube (1), la génératrice de la surface latérale faisant avec l'axe du tube un angle d'incidence constant ou variant de façon continue en direction radiale et en direction périphérique, de 10° à 70°, et des surfaces directrices (8) se dirigeant en direction périphérique vers l'extérieur alternent avec des surfaces directrices (9) se dirigeant vers l'intérieur, de sorte qu'environ la moitié de la section du tube est recouverte par des surfaces directrices (8) se dirigeant vers l'extérieur et l'autre moitié par des surfaces directrices se dirigeant vers l'intérieur.

2. Dispositif d'inversion et de mélange de matières en écoulement dans un tube de section quelconque, muni d'au moins un élément mélangeur, constitué par des surfaces directrices, caractérisé par le fait que, dans le dispositif selon la revendication 1, la droite génératrice du cône est remplacée par une courbe incurvée une ou plusieurs fois.

3. Dispositif selon la revendication 1 ou 2, caractérisé par le fait que les arêtes de coupe (3) des surfaces directrices (2) soit s'appliquent sur toute leur longueur contre la paroi intérieure du tube ou sont liées rigidement à la paroi du tube, soit laissent libre un interstice (7) par rapport à la paroi du tube, cet interstice présentant une largeur constante ou non constante.

4. Dispositif selon l'une des revendications 1 à 3, caractérisé par le fait que des surfaces directrices (2) se succédant axialement se recouvrent par leurs arêtes de coupe latérales ou laissent un espace intermédiaire.

5. Dispositif selon l'une des revendications 1 à 4, caractérisé par le fait que des surfaces directrices (2) de même inclinaison se succédant en direction périphérique sont décalés en direction axiale d'une quantité constante.

6. Dispositif selon l'une des revendications 1 à 5, caractérisé par le fait que les arêtes de coupe (3) externes des surfaces directrices (2) font avec la direction de l'axe du tube un angle de 45° à 90°.

7. Dispositif selon l'une des revendications 1 à 6, caractérisé par le fait que différents éléments mélangeurs sont rassemblés de telle manière que des surfaces directrices (8) se dirigeant vers l'extérieur font saillie respectivement à l'intérieur des espaces intermédiaires entre surfaces directrices (9) se dirigeant vers l'intérieur.

8. Dispositif selon l'une des revendications 1 à 7, caractérisé par le fait que les surfaces directrices (2) s'appliquent par leurs arêtes de coupe (4) intérieures contre un tube central (14) disposé dans l'axe du tube (1), ou y sont fixées.

9. Dispositif selon l'une des revendications 1 à 8, caractérisé par le fait que les surfaces directrices (8) se dirigeant vers l'extérieur sont séparées des surfaces directrices (9) voisines, se dirigeant vers l'intérieur, sur une étendue déterminée du rayon, par des surfaces de limitation (5) de telle manière que les surfaces de limitation (5) s'appliquent contre les arêtes de coupe (6) latérales des surfaces directrices (2), une section d'écoulement suffisamment grande demeurant libre au voisinage de la paroi du tube et au voisinage de l'axe du tube.

10. Dispositif selon la revendication 9, caractérisé par le fait que les surfaces de limitation (5) s'enroulent en forme d'hélice autour de l'axe du tube.

11. Dispositif pour regrouper sans mélangeage, vers l'extérieur, toute la zone intérieure d'un courant circulant dans un tube et, vers l'intérieur, la zone extérieure, selon l'une des revendications 1 à 10, caractérisé par le fait que les courants intérieur et extérieur sont séparés par un canal d'entrée et, grâce à la disposition des surfaces directrices (2) et des surfaces de limitation (5), aussi bien le courant intérieur que le courant extérieur est chacun rassemblé séparément et réparti en un nombre précis de canaux d'écoulement (10, 11), chaque canal d'écoulement (10, 11) remplissant un secteur de la section du tube, et une disposition correspondant au canal d'entrée provoque la distribution de l'ancien courant intérieur, provenant de ses canaux d'écoulement, sur la zone extérieure et celle du courant extérieur sur la zone intérieure.

12. Dispositif selon la revendication 11, caractérisé par le fait que la distribution des courants intérieur et extérieur sur les canaux d'écoulement en forme de secteur (10, 11) est assurée par un distributeur dans lequel sont disposés des surfaces directrices (8) se dirigeant vers l'extérieur et des surfaces directrices (9) se dirigeant vers l'intérieur qui se succèdent en direction périphérique de façon que les arêtes de coupe (4) intérieures des surfaces directrices (8) se dirigeant vers l'extérieur et les arêtes de coupe (3) externes des surfaces directrices (9) se dirigeant vers l'intérieur représentent le début du canal d'entrée, tandis que les arêtes de coupe (13) externes des surfaces directrices (8) se dirigeant vers l'extérieur s'appliquent contre la paroi du tube et les arêtes de coupe (4) internes des surfaces directrices (9) se dirigent vers l'intérieur ou bien se rencontrent par leur pointe ou bien s'appliquent contre le tube central (14) et la délimitation des différents canaux d'écoulement s'opère par les surfaces de délimitation (5), celles-ci s'étendant, dans leur extension radiale maximale, de la paroi du tube à l'axe ou au tube central.

13. Dispositif selon la revendication 12, caractérisé par le fait que le canal d'entrée est prolongé en direction de l'axe du tube par une pièce tubulaire (12) droite.

14. Dispositif selon l'une des revendications 1 à 8, caractérisé par le fait que soit les surfaces directrices (9) se dirigeant vers l'intérieur, soit les surfaces directrices (8) se dirigeant vers l'extérieur font défaut et on a fait tourner les surfaces directrices (8, 9) de l'élément suivant dans les secteurs libres de l'élément précédant.

15. Dispositif selon l'une des revendications 1 à 14, caractérisé par le fait qu'il est fabriqué, ou revêtu, totalement ou en partie, d'une matière qui possède des propriétés influençant favorablement une réaction chimique, catalysantes, adsorbantes ou autres.

Fig. 1

**Fig. 2** (Schnitt A-B v. Fig. 3)

**Fig. 3** (Querschnitt von Fig. 1)

# Fig.4

Fig. 5

**Fig. 6** (Schnitt A-B, Fig. 7)

**Fig. 7** (Querschnitt v. Fig. 5)

Fig. 8

Fig. 9

Fig. 10

Fig. 11

Fig. 12

Fig. 13

Fig.14

Fig. 15

0 063 729

**Fig. 16** (Längsschnitt v. Fig. 15)

**Fig. 17** (Draufsicht, oben und
Schnitt A B von Fig. 16, unten)